# EUROPÄISCHE PATENTSCHRIFT

(11) **EP 1 622 497 B1**
(45) Veröffentlichungstag und Bekanntmachung des Hinweises auf die Patenterteilung: **04.08.2010**
(21) Anmeldenummer: 04731145.1
(22) Anmeldetag: 05.05.2004
(51) Int. Cl.: A47L 9/12, A47L 9/00

(54) **AUSBLASFILTER MIT LUFTLEITDACH**
BLOW-OUT FILTER COMPRISING A COVER FOR CONDUCTING AIR
FILTRE D'EVACUATION COMPORTANT UN COUVERCLE DEFLECTEUR

(30) Priorität: 05.05.2003 DE 10320079
(43) Veröffentlichungstag der Anmeldung: 08.02.2006
(73) Patentinhaber: BSH Bosch und Siemens Hausgeräte GmbH, 81739 München (DE)
(72) Erfinder: HAMM, Silvio, 98617 Sülzfeld (DE); ILLIG, Roland, 97618 Heusstreu (DE); KLEINHENZ, Albert, 97659 Burgwallbach (DE); WEIGAND, Artur, 97618 Niederlauer (DE)
(86) Internationale Anmeldenummer: PCT/EP2004/004787
(87) Internationale Veröffentlichungsnummer: WO 2004/098368

(56) Entgegenhaltungen:
- DE-A- 19 925 227
- DE-C- 589 036
- GB-A- 308 457
- US-A1- 2002 129 706
- US-A1- 2002 170 138
- PATENT ABSTRACTS OF JAPAN Bd. 013, Nr. 562 (C-665), 13. Dezember 1989 (1989-12-13) -& JP 01 232919 A (TOKYO ELECTRIC CO LTD), 18. September 1989 (1989-09-18)

## Beschreibung

Die Erfindung betrifft eine Filtervorrichtung zum lösbaren Einsetzen in einen Staubsauger gemäß dem Oberbegriff des Anspruchs 1.

Aus der DE 199 25 227 C2 sind Abluftfilter bekannt, die in Rahmenkästen eingesetzt sind. Die Abluftfilter sind der in die Abgebungsluft mündenden Ausblasöffnung in Bezug auf die Strömungsrichtung der Ausblasluft vorgeschaltet. Die Abluftfilter bestehen aus mindestens zwei vor der Ausblasöffnung in einem Aufnahmeschacht zueinander schräg angeordneten Abschnitten. Die mindestens zwei Abschnitte des Abluftfilters sind schräg nach außen geneigt angeordnet. Durch die zueinander schräg gestellten Abschnitte des sich selbst tragenden Abluftfilters wird der Abluftstrom aufgespalten und entsprechend der Schrägstellung der Filterabschnitte in verschiedene Richtungen gelenkt. Durch diese Anordnung wird ein diffusierter Luftstrom erzeugt, der vom Benutzer als weniger störend empfunden wird. Nachteilig an diesem Stand der Technik ist es jedoch, dass eine Verwirbelung der aus den Filtern ausgeblasenen Luft nur durch das im Gehäuse des Staubsaugers angeordnete Ausblasgitter erreicht wird.

Die US 2002/170138 A1 offenbart eine weitere Filtervorrichtung gemäß dem Oberbegriff des Anspruchs 1.

Aufgabe der Erfindung ist es, eine Verwirbelung der aus dem Filter austretenden Luft erreichen zu können, ohne auf am Staubsaugergehäuse angeordnete Ausblasgitter angewiesen zu sein.

Diese Aufgabe wird erfindungsgemäß dadurch gelöst, dass die Filtervorrichtung Mittel aufweist, welche die aus dem Filtermaterial austretende Luft in Richtung zur Zentrumsachse der Ausblasöffnung hin umlenken. Durch die erfindungsgemäße Ausgestaltung wird eine Verwirbelung der aus dem Filtermaterial austretenden Luft dadurch erreicht, dass sich verschiedene Strömungswege der austretenden Luft kreuzen. Durch die sich kreuzenden Luftströmungswege wird eine besonders gute Verwirbelung der aus dem Filtermaterial austretenden Luft erreicht. Umfangreiche und die Luftströmung stark behindernde Einbauten zur Verwirbelung der Luft können dabei weitgehend entfallen. Die aus dem Filtermaterial austretende Luft kann unter geringem Druckverlust aus dem Staubsauger herausbefördert werden. Bei geringerem Druckverlust können kleinere und leistungsschwächere Motor- und Gebläseaggregate im Staubsauger eingesetzt werden. Somit ist nicht nur ein energiesparender Betrieb von den Staubsaugern möglich, sondern die Herstellkosten sind auch verringert, da deutlich kleinere Motoren und Gebläse verwendet werden können.

Die Mittel zum Umlenken der aus dem Filtermaterial austretenden Luft in Richtung zur Zentrumsachse der Ausblasöffnung hin können am Halterahmen der Filtervorrichtung angeordnet sein. Dies hat den Vorteil, dass die Mittel zum Umlenken der Luft zusammen mit dem Halterahmen der Filtervorrichtung aus dem Staubsauger herausgenommen oder in diesen eingesetzt werden können. Durch die Anordnung der Mittel am Halterahmen kann darauf verzichtet werden die Mittel am Gehäuse des Staubsaugers vorzusehen. Dies hat den Vorteil, dass je nach Art und Größe der einzusetzenden Filtervorrichtung die Mittel zum Umlenken der Luft der Art und der Größe der Filtervorrichtung angepasst sein können. Bei Benutzung des selben Staubsaugers können somit unterschiedliche Filtervorrichtungen vorgesehen sein, die jeweils angepasste Mittel zum Umlenken der Luft aufweisen. Damit wird ein besonders effizient angepasster Betrieb der Staubsauger durch Wahl einer besonders geneigten Filtervorrichtung ermöglicht.

Vorzugsweise können die Mittel am Halterahmen einstückig mitangeformt sein. Dies hat den Vorteil, dass die zur Filtervorrichtung gehörigen Mittel zum Umlenken der Luft vom Halterahmen nicht abgetrennt werden können und damit ein Verlieren der Mittel zum Umlenken der Luft ausgeschlossen ist. Des weiteren können durch das einstückige Anformen der Mittel zum Umlenken der Luft an den Halterahmen die Herstellkosten für die Filtervorrichtung verringert werden. Die Mittel zum Umlenken der Luft können an allen Rahmenseiten des Halterahmens vorgesehen sein. Indem alle Rahmenseiten des Halterahmens zur Anordnung der Mittel zum Umlenken der Luft verwendet werden, wird eine besonders effiziente Verwirbelung der aus dem Filtermaterial austretenden Luft erreicht, ohne die Luftströmung wesentlich zu behindern.

Vorzugsweise werden die Mittel zum Umlenken der aus dem Filtermaterial austretenden Luft durch die Luftleiteinrichtung gebildet, die als dem Filtermaterial in Strömungsrichtung der Luft nachgelagerte, nach innen geneigte Wandabschnitte aller Rahmenseiten ausgebildet ist. In einer einfachen, kostengünstigen Ausgestaltung der Mittel zum Umlenken der Luft wird die Luftleiteinrichtung zum Umlenken der Luft genutzt. Die Luftleiteinrichtung bildet Umlenkflächen, die in Randnähe des Filtermaterials austretende Luft in Richtung der Zentrumsachse des Filtermaterials hin umlenken. Durch die Ausbildung der Luftleiteinrichtung als nach innen geneigte Wandabschnitte des Halterahmens wird ein hohes Maß an Verwirbelung erreicht, ohne einen großen Druckabfall in Kauf nehmen zu müssen.

Es hat sich gezeigt, dass eine besonders gute Verwirbelung der aus dem Filtermaterial austretenden Luft erzielt wird, wenn die Luftleiteinrichtung um 45° bis 80°, vorzugsweise um 60° aus der Ebene der Rahmenseiten nach innen geneigt ist. Durch die Neigung der Luftleiteinrichtung um 45° bis 80° aus der Ebene der Rahmenseiten wird eine ausreichend hohe Verwirbelung der Luft erreicht, ohne jedoch einen allzu großen Druckabfall hinter dem Filtermaterial zu verursachen. Ein wirtschaftlich sinnvoller Kompromiss zwischen Verwirbelungswirkung und möglichst geringem Druckabfall ist dann gegeben, wenn die Luftleiteinrichtung um 60° aus der Ebene der Rahmenseiten nach innen geneigt ist.

In einer vorteilhaften Ausgestaltung der Erfindung verringert die Luftleiteinrichtung den Öffnungsquerschnitt der Ausblasöffnung auf 50 % bis 70 %, vorzugsweise auf 60 % des ursprünglichen Öffnungsquerschnitts. Der ursprüngliche Öffnungsquerschnitt der Ausblasöffnung entspricht im allgemeinen der wirksamen Durchtrittsfläche des Filtermaterials. Es hat sich gezeigt, dass ein besonders wirtschaftlicher Kompromiss zwischen Verwirbelungswirkung und möglichst geringem Druckabfall dann erreicht wird, wenn die Luftleiteinrichtung den Öffnungsquerschnitt der Ausblasöffnung auf 60 % des ursprünglichen Öffnungsquerschnitts verringert.

Ein Schutzgitter kann in Strömungsrichtung dem Filtermaterial nachgeschaltet in der Ausblasöffnung angeordnet sein. Das Schutzgitter dient einerseits dazu das in dem Halterahmen befindliche Filtermaterial flächig abzustützen und andererseits dazu das Filtermaterial vor Beschädigungen von außen zu schützen. Das Schutzgitter kann durch eine Vielzahl von längs und quer zur Filterfläche verlaufende schmale Stege gebildet werden. Die Stege können am Halterahmen einstückig mitangeformt sein. Die Stegbreite soll möglichst gering gewählt sein, um den wirksamen Querschnitt der Ausblasöffnung möglichst wenig zu verringern. Es ist jedoch darauf zu achten, dass die Stege ausreichend breit gestaltet sind, um ihre Trag- und Schutzfunktion erfüllen zu können.

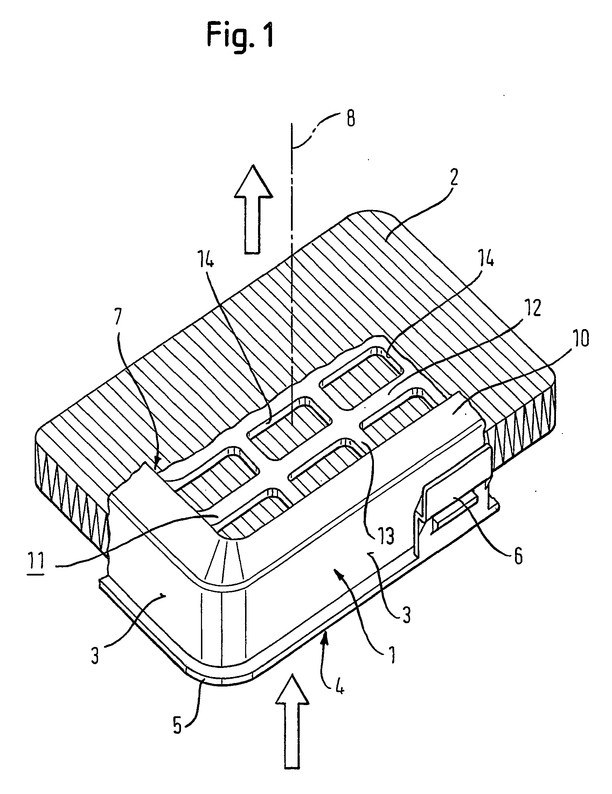

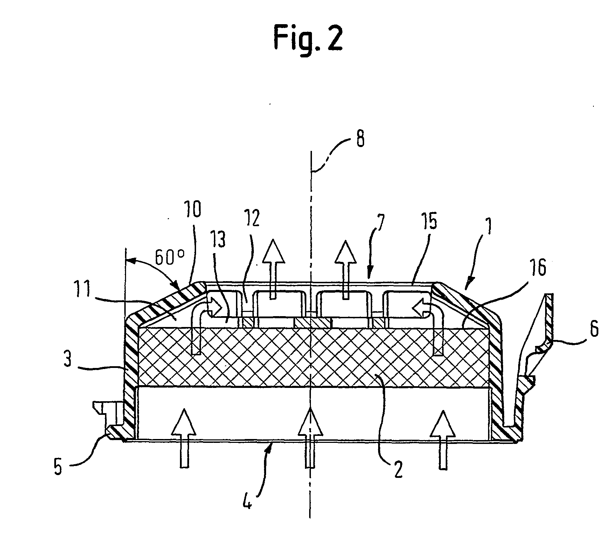

Die Erfindung ist anhand der Figuren 1 und 2 näher erläutert. Es zeigen:
- Figur 1: eine perspektivische Ansicht einer erfindungsgemäßen Filtervorrichtung;
- Figur 2: einen Querschnitt durch die erfindungsgemäße Filtervorrichtung gemäß Figur 1.

Die in Figur 1 gezeigte Filtervorrichtung weist einen Halterahmen 1 auf, in den ein Filtermaterial 2 eingesetzt ist. Der Halterahmen 1 weist vier Rahmenseiten 3 auf, die einen geschlossenen rechteckigen Rähmenzug bilden. Jeweils zwei Rahmenseiten 3 treffen in einem rechten Winkel aufeinander und bilden dadurch eine Ecke des Halterahmens 1. Die Ecke des Halterahmens 1 weist eine abgerundete Kontur auf. Die Strömungsrichtung der Luft durch die Filtervorrichtung ist durch Pfeile angedeutet. Der Halterahmen 1 umschließt bodenseitig eine anströmseitige Öffnung 4. Um die anströmseitige Öffnung 4 herumverlaufend ist an dem der Bodenseite zugewandten Ende des Halterahmens 1 ein umlaufender Steg 5 angeformt. Der Steg 5 verläuft rechtwinklig zu den Rahmenseiten 3 des Halterahmens 1 und erstreckt sich nach außen. In der eingesetzten Position der Filtervorrichtung in einen Staubsauger liegt die bodenseitige Fläche des umlaufenden Steges 5 an einer im Gehäuse des Staubsaugers angeordneten Dichtung (nicht dargestellt) luftdicht an. Ein Haltemittel 6 zur lösbaren Befestigung der Filtervorrichtung am Staubsauger ist an der Rahmenseite 3 des Halterahmens 1 angeformt. Das elastisch ausgebildete Haltemittel 6 greift in nicht dargestellte Rastnasen am Staubsauger ein.

Der anströmseitigen Öffnung 4 gegenüberliegend ist eine Ausblasöffnung 7 durch den Halterahmen 1 begrenzt. Eine Zentrumsachse 8 der Ausblasöffnung 7 ist in Figur 1 durch eine Strichpunktlinie dargestellt. Eine Luftleiteinrichtung 10 ist am Halterahmen 1 angeordnet. Die Luftleiteinrichtung 10 besteht aus dachgiebelartig sich an der oberen Kante des Halterahmens anschließende Ablenkflächen ausgebildet. An den vorzugsweise aus Kunststoff hergestellten Halterahmen 1 ist die Luftleiteinrichtung 10 einstückig mitangeformt. Dabei sind die Wandabschnitte aller Rahmenseiten 3 nach innen geneigt. Jeweils zwei rechtwinklig zueinander verlaufende nach innen geneigte Wandabschnitte bilden eine firstartige Ecke des Halterahmen 1. In der Ausblasöffnung 7 ist in Luftströmungsrichtung dem Filtermaterial 2 nachgeschaltet ein Schutzgitter 11 angeordnet. Das Schutzgitter 11 wird durch eine Anzahl von parallel im Abstand zueinander verlaufenden Stegen 12 gebildet, die sich im rechten Winkel zu einer weiteren Anzahl von parallel in einem Abstand zueinander verlaufenden weiteren Stegen 13 angeordnet sind. Die Stege 12 und 13 bilden das Schutzgitter 11 mit rechteckigen Durchtrittsöffnungen 14.

In Figur 2 ist die Filtervorrichtung aus Figur 1 im Querschnitt dargestellt. Das Filtermaterial 2 ist an der Innenseite des Halterahmens 1 befestigt. Zur Befestigung ist zwischen den Seitenflächen des Filtermaterials 2 und den Innenflächen der Rahmenseiten 3 des Halterahmens 1 ein Klebstoff eingebracht. Die Luftleiteinrichtung 10 wird durch einen Wandabschnitt der Rahmenseite 3 gebildet. Der nach innen geneigte Wandabschnitt (Luftleiteinrichtung 10) ist um 60° aus der Ebene der Rahmenseite 3 nach innen geneigt. Der Öffnungsquerschnitt 15 der Ausblasöffnung 7 ist auf 60 % des ursprünglichen Öffnungsquerschnittes 16 verringert. Die Stege 12 und 13 des Schutzgitters 11 erstrecken sich unter die Luftleiteinrichtung 10 hin bis zu den Innenseiten der Rahmenseite 3. An mindestens einer Außenseite einer Rahmenseite 3 ist das Haltemittel 6 angeformt. Das Haltemittel 6 ist filmscharnierartig an der Außenwand der Rahmenseite 3 angeformt.

## Patentansprüche

1. Filtervorrichtung zum lösbaren Einsetzen in einen Staubsauger, die einen Halterahmen (1) aufweist, der zwischen einer anströmseitigen Öffnung (4) und einer Ausblasöffnung (7) ein Filtermaterial (2) trägt, und die eine Luftleiteinrichtung zum Umlenken der aus der Ausblasöffnung (7) ausströmenden Luft besitzt, **dadurch gekennzeichnet, dass** die Filtervorrichtung Mittel (10) aufweist, welche die aus dem Filtermaterial (2) austretende Luft in Richtung zur Zentrumsachse (8) der Ausblasöffnung (7) hin umlenken.

2. Filtervorrichtung nach Anspruch 1, **dadurch gekennzeichnet, dass** die Mittel (10) am Halterahmen (1) angeordnet sind.

3. Filtervorrichtung nach Anspruch 2, **dadurch gekennzeichnet, dass** die Mittel (10) am Halterahmen (1) einstückig mit angeformt sind.

4. Filtervorrichtung nach einem der Ansprüche 1 bis 3, **dadurch gekennzeichnet, dass** die Mittel (10) an allen Rahmenseiten (3) des Halterahmens (1) vorgesehen sind.

5. Filtervorrichtung nach Anspruch 4, **dadurch gekennzeichnet, dass** die Mittel (10) durch die Luftleiteinrichtung gebildet werden, die als dem Filtermaterial (2) in Strömungsrichtung der Luft nachgelagerte, nach innen geneigte Wandabschnitte aller Rahmenseiten (3) ausgebildet ist.

6. Filtervorrichtung nach einem der Ansprüche 1 bis 5, **dadurch gekennzeichnet, dass** die Luftleiteinrichtung (10) um 45° bis 80°, vorzugsweise um 60° aus der Ebene der Rahmenseiten (1) nach innen geneigt ist.

7. Filtervorrichtung nach einem der Ansprüche 1 bis 6, **dadurch gekennzeichnet, dass** die Luftleiteinrichtung (10) den Öffnungsquerschnitt (15) der Ausblasöffnung (7) auf 50% bis 70%, vorzugsweise auf 60% des ursprünglichen Öffnungsquerschnittes (16) verringert.

8. Filtervorrichtung nach einem der Ansprüche 1 bis 7, **dadurch gekennzeichnet, dass** ein Schutzgitter (11) in Luftströmungsrichtung dem Filtermaterial (2) nachgeschaltet in der Ausblasöffnung (7) angeordnet ist.

## Claims

1. Filter device for releasable insertion into a vacuum cleaner, which comprises a holding frame (1), which carries a filter material (2) between an opening (4) at the inflow side and an exhaust opening (7) and which has an air guide device for deflecting the air flowing our of the exhaust opening (7), **characterised in that** the filter device comprises means (10) which deflect the air, which is issuing from the filter material (2), in direction towards the centre axis (8) of the exhaust opening (7).

2. Filter device according to claim 1, **characterised in that** the means (10) are arranged at the holding frame (1).

3. Filter device according to claim 2, **characterised in that** the means (10) are integrally formed at the holding frame (1).

4. Filter device according to any one of claims 1 to 3, **characterised in that** the means (10) are provided at all frame sides (3) of the holding frame (1).

5. Filter device according to claim 4, **characterised in that** the means (10) are formed by the air guide device, which is constructed as wall sections, which are positioned downstream of the filter material (2) in the flow direction of the air and which are inwardly inclined, of all frame sides (3).

6. Filter device according to any one of claims 1 to 5, **characterised in that** the air guide device (10) is inclined inwardly by 45° to 80°, preferably by 60°, out of the plane of the frame sides (1).

7. Filter device according to any one of claims 1 to 6, **characterised in that** the air guide device (10) reduces the opening cross-section (15) of the exhaust opening (7) to 50% to 70%, preferably to 60%, of the original opening cross-section (16).

8. Filter device according to any one of claims 1 to 7, **characterised in that** a protective grill (11) is arranged in the exhaust opening (7) downstream of the filter material (2) in the air flow direction.

## Revendications

1. Dispositif filtrant à insérer de façon amovible dans un aspirateur, qui présente un cadre de retenue (1) portant un matériau filtrant (2) entre une ouverture (4) côté arrivée et une ouverture d'évacuation (7) et comprend un dispositif de guidage d'air pour la déviation de l'air sortant de l'ouverture d'évacuation (7), **caractérisé en ce que** le dispositif filtrant présente des moyens (10) qui dévient l'air sortant du matériau filtrant (2) en direction de l'axe central (8) de l'ouverture d'évacuation (7).

2. Dispositif filtrant selon la revendication 1, **caractérisé en ce que** les moyens (10) sont disposés sur le cadre de retenue (1).

3. Dispositif filtrant selon la revendication 2, **caractérisé en ce que** les moyens (10) sont formés d'une seule pièce sur le cadre de retenue (1).

4. Dispositif filtrant selon l'une quelconque des revendications 1 à 3, **caractérisé en ce que** les moyens (10) sont prévus sur tous les côtés de cadre (3) du cadre de retenue (1).

5. Dispositif filtrant selon la revendication 4, **caractérisé en ce que** les moyens (10) sont formés par le dispositif de guidage d'air, qui est conçu sous forme de parties de paroi de tous les côtés de cadre (3), logées en aval du matériau filtrant (2) dans le sens d'écoulement de l'air et inclinées vers l'intérieur.

6. Dispositif filtrant selon l'une quelconque des revendications 1 à 5, **caractérisé en ce que** le dispositif de guidage d'air (10) est incliné de 45 à 80°, de préférence de 60° à partir du plan des côtés de cadre (1) vers l'intérieur.

7. Dispositif filtrant selon l'une quelconque des revendications 1 à 6, **caractérisé en que** le dispositif de guidage d'air (10) réduit la section d'ouverture (15) de l'ouverture d'évacuation (7) à 50 % jusqu'à 70 % et de préférence à 60 % de la section d'ouverture (16) initiale.

8. Dispositif filtrant selon l'une quelconque des revendications 1 à 7, **caractérisé en ce qu'**une grille de protection (11) est disposée dans l'ouverture d'évacuation (7), montée en aval du matériau filtrant (2) dans le sens d'écoulement d'air.
